# EUROPEAN PATENT APPLICATION

(11) **EP 1 915 015 A2**
(43) Date of publication of application: **23.04.2008**
(21) Application number: 07020486.2
(22) Date of filing: 19.10.2007
(51) Int. Cl.: H04Q 7/38

(54) **Apparatus and method for vertical handover in broadband wireless communication system**

(30) Priority: 20.10.2006 KR 20060102351
(71) Applicant: Samsung Electronics Co., Ltd., Suwon-si, Gyeonggi-Do (KR)
(72) Inventor: Won, Jeong-Jae, Hwaseong-si Gyeonggi-do (KR); Kim, Young-Seok, Seongnam-si Gyeonggi-do (KR); Hwang, Eui-Seok, Hwaseong-si Gyeonggi-do (KR)
(74) Representative: Boakes, Jason Carrington

(57) **Abstract**

Provided is an apparatus and method for performing a vertical handover in a multi-network wireless communication system. In a method for a vertical handover of a user terminal in a wireless communication system, a vertical handover control module selects a target network for a vertical handover using information about neighboring networks obtained from an information service server through an adaptation module. If the target network is different from a serving network, the vertical handover control module requests collection of target network information to a target network interface communicating with the target network through the adaptation module. The target network interface transmits the target network information collected in response to the information collection request to the vertical handover control module. The vertical handover control module determines a target base station using the collected target network information.

## Description

### CROSS-REFERENCE TO RELATED APPLICATION(S) AND CLAIM OF

The present application claims priority under 35 U.S.C. § 119 to an application filed in the Korean Intellectual Property Office on October 20, 2006 and allocated Serial No. 2006-102351, the contents of which are incorporated herein by reference.

The present application relates generally to an apparatus and method for performing a handover in a wireless communication system, and in particular, to an apparatus and method for performing a vertical handover in a wireless communication system supporting multiple networks (hereinafter referred to as a multi-network wireless communication system).

With the increasing interest in multimedia services, extensive research is being conducted to provide the advanced fourth-generation (4G) communication system with a higher data rate. Examples of the 4G communication technology are Wireless Local Area Network (WLAN) of the Institute of Electrical and Electronics Engineers (IEEE) 802.11 group and Wireless Metropolitan Area Network (WMAN) of the IEEE 802.16 group.

Based on the IEEE 802.11 standards, the WLAN provides a high-speed communication service to stationary users in indoor or downtown areas in order to expand a wired LAN. The WLAN can provide a data rate of from several tens of Mbps to several hundreds of Mbps for users in its service area (coverage). However, the WLAN cannot support the mobility of users and provides a small coverage.

Based on the IEEE 802.16 standards, the WMAN provides data services for stationary, pedestrian and medium-speed (up to 60 km/h) mobile users. The WMAN supports an average data rate of several tens of Mbps. The WMAN supports the mobility of users and provides a large coverage.

As described above, the networks supported by the multi-network wireless communication system have their respective advantages and disadvantages. Thus, the multi-network wireless communication system provides a user with a service through a network suitable for a desired service type.

Therefore, the multi-network wireless communication system needs smooth inter-working between its networks. That is, the multi-network wireless communication system must support a seamless vertical handover between heterogeneous networks or media.

### SUMMARY OF THE INVENTION

To address the above-discussed deficiencies of the prior art, it is a primary object of the present invention to substantially solve at least the above problems and/or disadvantages and to provide at least the advantages below. Accordingly, an object of the present invention is to provide an apparatus and method for performing a vertical handover in a multi-network wireless communication system.

Another object of the present invention is to provide an apparatus and method for reducing a signaling overhead in a vertical handover in a multi-network wireless communication system.

According to one aspect of the present invention, a method for a vertical handover of a user terminal in a wireless communication system includes the steps of: selecting, at a vertical handover control module, a target network for a vertical handover using information about neighboring networks obtained from an information service server through an adaptation module; if the target network is different from a serving network, requesting collection of target network information from the vertical handover control module to a target network interface communicating with the target network through the adaptation module; transmitting the target network information collected in response to the information collection request from the target network interface to the vertical handover control module; and determining, at the vertical handover control module, a target base station using the collected target network information.

According to another aspect of the present invention, a method for a vertical handover of a user terminal from a WLAN to a broadband mobile network in a wireless communication system includes the steps of: selecting, at a vertical handover control module, a target network for a vertical handover using information about neighboring networks obtained from an information service server through an adaptation module; if the target network is the broadband mobile network, requesting collection of information about the broadband mobile network from the vertical handover control module to a first interface communicating with the broadband mobile network through the adaptation module; transmitting the information about the broadband mobile network collected in response to the information collection request from the first interface to the vertical handover control module; and determining, at the vertical handover control module, a target base station using the information of the broadband mobile network.

According to still another aspect of the present invention, a method for a vertical handover of a user terminal from a broadband mobile network to a WLAN in a wireless communication system includes the steps of: selecting, at a vertical handover control module, a target network for a vertical handover using information about neighboring networks obtained from an information service server through an adaptation module; if the target network is the WLAN, requesting collection of information about the WLAN from the vertical handover control module to a first interface communicating with the WLAN through the adaptation module; transmitting the information about the WLAN collected in response to the information collection request from the first interface to the vertical handover control module; and determining, at the vertical handover control module, a target base station using the information of the WLAN.

According to even another aspect of the present invention, an apparatus for a user terminal in a multi-network wireless communication system includes: a first MAC layer for communicating with a serving network and transmitting a neighboring network information request signal to an adaptation module if a link change event occurs in a physical layer; one or more second MAC layers for communicating with other networks than the serving network; the adaptation module for converting a signal, received from the first MAC layer and the second MAC layers, into the format defined for media independent signal processing and transmitting the resulting signal to a vertical handover control module; and the vertical handover control module for performing a control operation for obtaining information about neighboring networks, upon receipt of the neighboring network information request signal from the adaptation module.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 is a diagram illustrating a configuration of a wireless communication system using a vertical handover scheme according to the present invention;

FIGURE 2 is a block diagram of a user terminal for performing a vertical handover according to the present invention;

FIGURE 3 is a flowchart illustrating an operation of the user terminal for performing a vertical handover according to an embodiment of the present invention;

FIGURE 4A is a diagram illustrating a procedure for selecting a broadband mobile network for a vertical handover from a WLAN according to an embodiment of the present invention;

FIGURE 4B is a diagram illustrating a procedure for performing a vertical handover from the WLAN to the broadband mobile network according to an embodiment of the present invention;

FIGURE 5A is a diagram illustrating a procedure for selecting a WLAN for a vertical handover from a broadband mobile network according to an embodiment of the present invention;

FIGURE 5B is a diagram illustrating a procedure for performing a vertical handover from the broadband mobile network to the WLAN according to an embodiment of the present invention;

FIGURE 6A is a diagram illustrating a procedure for selecting a broadband mobile network for a vertical handover from a WLAN according to another embodiment of the present invention;

FIGURE 6B is a diagram illustrating a procedure for performing a vertical handover from the WLAN to the broadband mobile network according to another embodiment of the present invention;

FIGURE 7A is a diagram illustrating a procedure for selecting a WLAN for a vertical handover from a broadband mobile network according to another embodiment of the present invention; and

FIGURE 7B is a diagram illustrating a procedure for performing a vertical handover from the broadband mobile network to the WLAN according to another embodiment of the present invention.

### DETAILED DESCRIPTION OF THE INVENTION

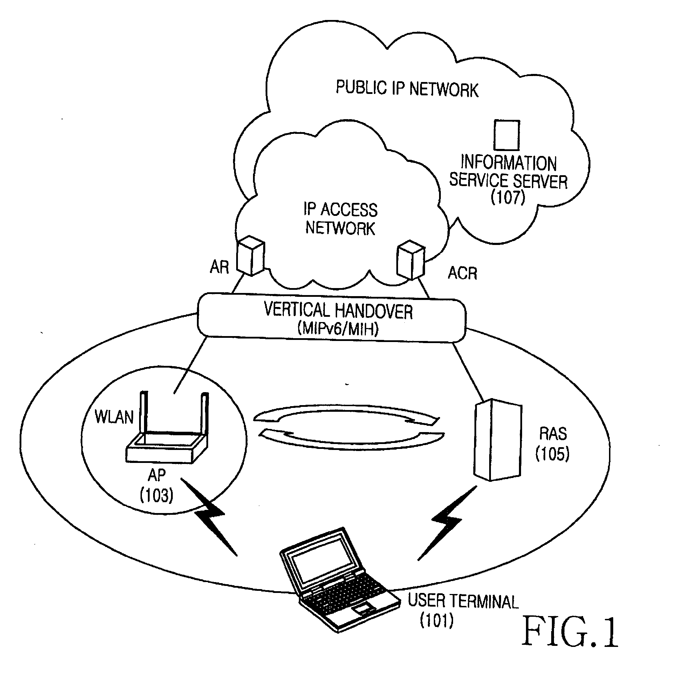

FIGURES 1 through 7B, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless network.

Hereinafter, a description is given of an apparatus and method for performing a vertical handover in a multi-network wireless communication system according to the present invention. Although the following description is made in the context of a vertical handover between a WLAN and a broadband mobile network (e.g., an IEEE 802.16 system), the present invention is also applicable to a vertical handover between other networks.

FIGURE 1 is a diagram illustrating a configuration of a wireless communication system using a vertical handover scheme according to the present invention.

Referring to FIGURE 1, the wireless communication system supports multiple networks including a WLAN and a broadband mobile network. The WLAN communicates with user terminals in a service area (coverage) through an Access Point (AP) 103, and the broadband mobile network communicates with user terminals in a service area through a Radio Access Station (RAS) 105. The AP and the RAS serve as base stations.

Therefore, a user terminal 101 connecting to the wireless communication system can receive a service through the WLAN or the broadband mobile network. The user terminal 101 can perform a vertical handover by obtaining information about neighboring networks from an information service server 107. The information service server 107 provides the user terminal 101 with information about neighboring networks as well as information about a serving network that is communicating with the user terminal 101.

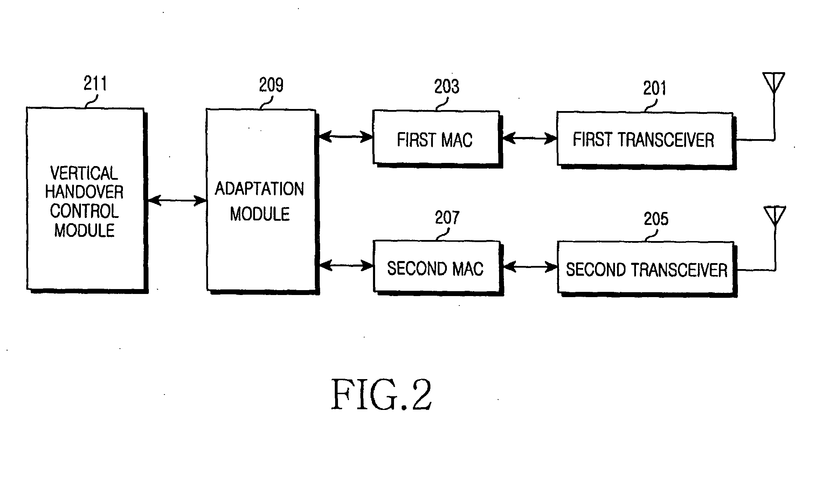

As described above, the user terminal 101 must receive services through multiple networks in order to support a vertical handover in the wireless communication system. Thus, as illustrated in FIGURE 2, the user terminal 101 must include multiple radio interfaces for supporting multiple networks.

FIGURE 2 is a block diagram of a user terminal for performing a vertical handover according to the present invention.

Referring to FIGURE 2, the user terminal includes a first transceiver 201, a first Media Access Control (MAC) 203, a second transceiver 205, a second MAC 207, an adaptation module 209, and a vertical handover control module 211.

The first transceiver 201 transmits/receives radio-frequency (RF) signals through a WLAN. The first MAC 203 converts an RF signal received from the first transceiver 201 into a baseband signal. The first transceiver 201 and the first MAC 203 are disabled when the user terminal communicates through the WLAN.

The second transceiver 205 transmits/receives RF signals through a broadband mobile network. The second MAC 207 converts an RF signal received from the second transceiver 205 into a baseband signal. The second transceiver 205 and the second MAC 207 are disabled when the user terminal communicates through the broadband mobile network.

Media Dependent Service Access Points (MD-SAPs) are provided between the adaptation module 209 and the MACs 203 and 207. Each MD-SAP uses a signal defined according to each MAC type. For example, an MD-SAP between the WLAN MAC 203 and the adaptation module 209 uses a signal defined in the MLME SAP of the IEEE 802.11 standards. Also, an MD-SAP between the broadband mobile network MAC 207 and the adaptation module 209 uses a signal defined in the C_SAP Primitives of the IEEE 802.16g standards.

The adaptation module 209 receives different types of signals from the MACs 203 and 207, converts the received signal into a MAC-type independent signal, and provides the resulting signal to the vertical handover control module 211.

Also, the adaptation module 209 receives a signal from the vertical handover control module 211, converts the received signal into a signal suitable for each MAC type, and provides the resulting signal to the corresponding MAC.

The vertical handover control module 211 controls a vertical handover of the user terminal according to a signal received from the adaptation module 209.

Hereinafter, a description is given of an operation of the user terminal for performing a vertical handover in the wireless communication system. Although the following description is made in the context of a vertical handover from the WLAN to the broadband mobile network, the present invention is also applicable to a vertical handover from the broadband mobile network to the WLAN.

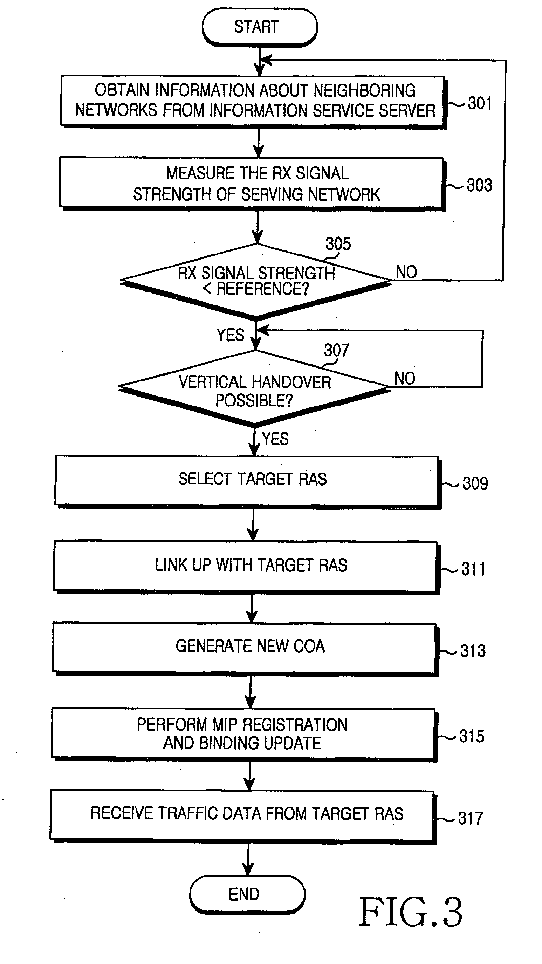

FIGURE 3 is a flowchart illustrating an operation of the user terminal for performing a vertical handover according to an embodiment of the present invention.

Referring to FIGURE 3, if a link parameter change event occurs, the user terminal communicating through the WLAN (i.e., the serving network) obtains information about neighboring networks from the information service server 107 (see FIGURE 1) using the vertical handover control module 211 (see FIGURE 2), in step 301.

In step 303, the user terminal measures the received (RX) signal strength of the WLAN.

In step 305, based on the measured RX signal strength, the user terminal determines whether it deviates from the coverage of the WLAN. For example, by comparing the RX signal strength with a reference value, the user terminal determines whether it deviates from the coverage of the WLAN.

If the RX signal strength is equal to or greater than the reference value, the user terminal determines that it does not deviate from the coverage of the WLAN. In this case, the user terminal returns to step 301.

On the other hand, if the RX signal strength is smaller than the reference value, the user terminal determines that it deviates from the coverage of the WLAN. In this case, the user terminal proceeds to step 307. In step 307, using the neighboring network information obtained from the information service server 107, the user terminal determines whether there is a connectable broadband mobile network. If there is a connectable broadband mobile network, the user terminal proceeds to step 309 in order to perform a vertical handover to the broadband mobile network.

In step 309, the user terminal collects control signals broadcast from broadband mobile networks corresponding to the neighboring network information and selects a target RAS (Radio Access Station) for the vertical handover according to the collected control signals.

In step 311, the user terminal links up with the target RAS. For example, the user terminal performs ranging, basic capability negotiation, and registration for the target RAS.

In step 313, the user terminal performs Dynamic Host Configuration Protocol (DHCP) to receive or generate a new Care of Address (CoA) for communicating with the target RAS.

In step 315, the user terminal performs Mobile IP (MIP) registration and binding update for the target RAS. Thus, packet flow for the user terminal is changed.

In step 317, the user terminal receives traffic data from the target RAS. In this case, the user terminal disables the first MAC 103 and the first transceiver 101 that are used to communicate with the WLAN.

Thereafter, the vertical handover operation of the user terminal is ended.

Hereinafter, a description is given of a procedure for performing a vertical handover in the multi-network wireless communication system according to the present invention. The vertical handover procedure includes a procedure for selecting a network for a vertical handover and a procedure for performing a vertical handover to the selected network.

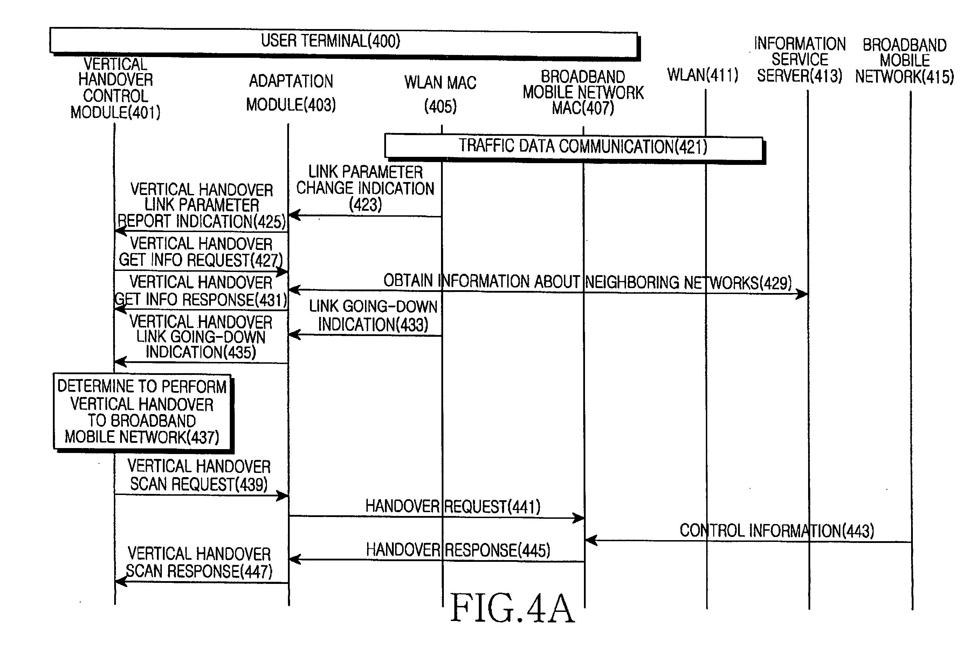

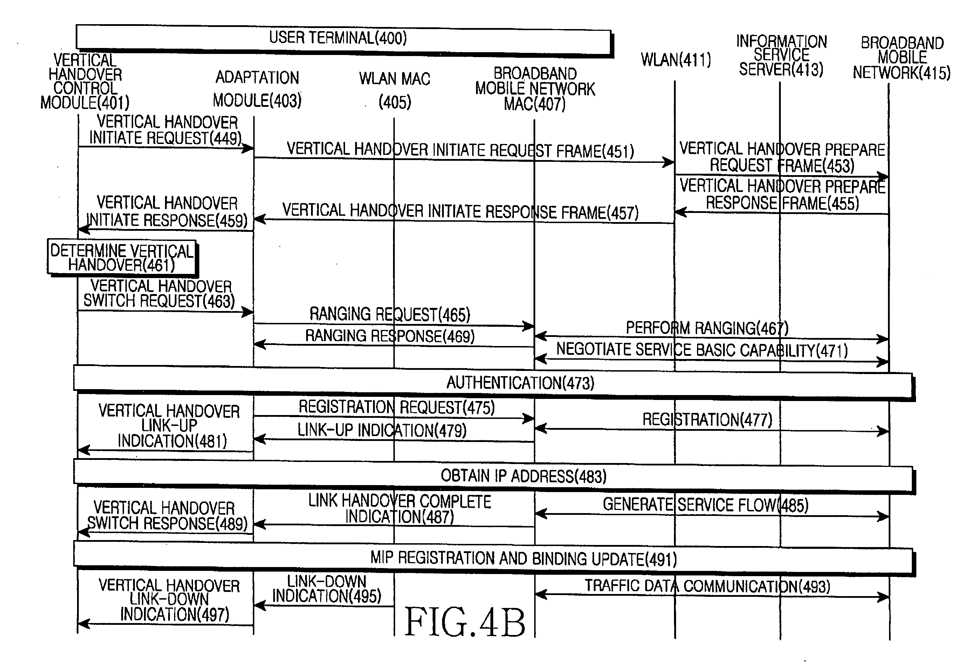

FIGURES 4A and 4B illustrate a procedure for performing a vertical handover from a WLAN ( i . e . , a serving network) to a broadband mobile network (i.e., a target network) according to an embodiment of the present invention.

FIGURE 4A is a diagram illustrating a procedure for selecting a broadband mobile network for a vertical handover from a WLAN according to an embodiment of the present invention.

Referring to FIGURE 4A, a user terminal 400 receives a service through a WLAN 411 in step 421. That is, the user terminal 400 transmits/receives traffic data through the WLAN 411. In this case, the user terminal 400 disables a broadband mobile network MAC 407 that is used to communicate with a broadband mobile network 415.

If a Link Parameter Change event occurs, a WLAN MAC 405 transmits a Link Parameter Change Indication signal to an adaptation module 403 in step 423. That is, if the Link Parameter Change event occurs, the WLAN MAC 405 transmits the Link Parameter Change Indication signal to the adaptation module 403, determining that a wireless link with the WLAN 411 is in a poor state.

Upon receipt of the Link Parameter Change Indication signal, the adaptation module 403 transmits a Vertical Handover Link Parameter Report Indication signal to a vertical handover control module 401 in step 425.

Upon receipt of the Vertical Handover Link Parameter Report Indication signal, the vertical handover control module 401 transmits a Vertical Handover Get Info Request signal to the adaptation module 403 in order to obtain information about neighboring networks from an information service server 413, in step 427.

Upon receipt of the Vertical Handover Get Info Request signal, the adaptation module 403 obtains information about networks neighboring the user terminal 400 from the information service server 413 in step 429. For example, in order to obtain the information about the networks neighboring the user terminal 400, the adaptation module 403 transmits a Get Information Request frame to the information service server 413. In response to the Get Information Request frame, the information service server 413 transmits a Get Information Response frame, including the information about the networks neighboring the user terminal 400, to the adaptation module 403.

In step 431, the adaptation module 403 transmits a Vertical Handover Get Info Response signal, including the information about the networks neighboring the user terminal 400, to the vertical handover control module 401.

Thereafter, by measuring the RX signal strength from the WLAN 411, the WLAN MAC 405 determines whether the user terminal 400 deviates from the coverage of the WLAN 411.

If the user terminal 400 deviates from the coverage of the WLAN 411, the WLAN MAC 405 transmits a Link Going-Down Indication signal to the adaptation module 403 in step 433. For example, if the RX signal strength from the WLAN 411 is smaller than a predetermined reference value, the WLAN MAC 405 determines that the user terminal 400 deviates from the coverage of the WLAN 411.

Upon receipt of the Link Going-Down Indication signal, the adaptation module 403 transmits a Vertical Handover Link Going-Down Indication signal to the vertical handover control module 401 in step 435.

Upon receipt of the Vertical Handover Link Going-Down Indication signal, the vertical handover control module 401 determines whether there is a neighboring broadband mobile network 415 for a vertical handover, using the neighboring network information obtained from the information service server 413, in step 437. If there is the neighboring broadband mobile network 415, the vertical handover control module 401 determines to perform a vertical handover to the broadband mobile network 415.

If there is the neighboring broadband mobile network 415, the vertical handover control module 401 transmits a Vertical Handover Scan Request signal to the adaptation module 403 in order to obtain information about the neighboring broadband mobile network 415, in step 439.

Upon receipt of the Vertical Handover Scan Request signal, the adaptation module 403 enables the broadband mobile network MAC 407 in order to obtain the information about the neighboring broadband mobile network 415. Thereafter, the adaptation module 403 transmits a Handover Request (C_HO_REQ) signal to the broadband mobile network MAC 407 in step 441.

Upon receipt of the Handover Request signal, the broadband mobile network MAC 407 scans and collects a broadcast signal of the neighboring broadband mobile network 415 in step 443. The broadcast signal includes a downlink MAP signal, an uplink MAP signal, a Downlink Channel Descriptor (DCD) signal, and an Uplink Channel Descriptor (UCD) signal.

In step 445, the broadband mobile network MAC 407 transmits a Handover Response (C_HO_RSP) signal, including the broadcast signal of the neighboring broadband mobile network 415, to the adaptation module 403.

Upon receipt of the Handover Response signal, the adaptation module 403 transmits a Vertical Handover Scan Response signal, including the broadcast signal of the neighboring broadband mobile network 415, to the vertical handover control module 401 in step 447.

FIGURE 4B is a diagram illustrating a procedure for performing a vertical handover from the WLAN to the broadband mobile network according to an embodiment of the present invention.

Referring to FIGURE 4B, the vertical handover control module 401 determines a target RAS in the broadband mobile network 415, to which the user terminal 400 will be handed over. For example, the vertical handover control module 401 determines a target RAS using the broadcast signal of the neighboring broadband mobile network 415, which is included in the Vertical Handover Scan Response signal received from the adaptation module 403.

Thereafter, the vertical handover control module 401 transmits a Vertical Handover Initiate Request signal including information about the target RAS to the adaptation module 403, in step 449.

Upon receipt of the Vertical Handover Initiate Request signal, the adaptation module 403 transmits a Vertical Handover Initiate Request Frame signal to the WLAN 411 in order to report the vertical handover of the user terminal 400, in step 451.

Upon receipt of the Vertical Handover Initiate Request Frame signal, the WLAN 411 detects the target RAS to which the user terminal 400 will be handed over. Thereafter, the WLAN 411 transmits a Vertical Handover Prepare Request Frame signal to the broadband mobile network 415 of the target RAS in step 435.

Upon receipt of the Vertical Handover Prepare Request Frame signal, the broadband mobile network 415 determines whether the vertical handover of the user terminal 400 is possible according to the load amount. Thereafter, the broadband mobile network 415 reports the possibility of the vertical handover of the user terminal 400 to the adaptation module 403 through the WLAN 411, in steps 455 and 457. For example, the broadband mobile network 415 transmits a Vertical Handover Prepare Response Frame signal to the WLAN 411 in step 455. Upon receipt of the Vertical Handover Prepare Response Frame signal, the WLAN 411 transmits a Vertical Handover Initiate Response Frame signal to the adaptation module 403 in step 457.

Upon receipt of the Vertical Handover Initiate Response Frame signal, the adaptation module 403 transmits a Vertical Handover Initiate Response signal to the vertical handover control module 401 in step 459.

Upon receipt of the Vertical Handover Initiate Response signal, the vertical handover control module 401 determines the possibility of the vertical handover to the broadband mobile network 415, which is included in the Vertical Handover Initiate Response signal, in step 461.

If the vertical handover to the broadband mobile network 415 is possible, the vertical handover control module 401 transmits a Vertical Handover Switch Request signal to the adaptation module 403 in step 463.

Upon receipt of the Vertical Handover Switch Request signal, the adaptation module 403 transmits a Ranging Request (C_NEM_REQ) signal to the broadband mobile network MAC 407 in order to establish a link with the broadband mobile network 415, in step 465.

Upon receipt of the Ranging Request signal, the broadband mobile network MAC 407 performs ranging with the broadband mobile network 415 in step 467.

In step 469, the broadband mobile network MAC 407 transmits a Ranging Response (C_NAM_RSP) signal to the adaptation module 403 in order to report the completion of the ranging.

In step 471, the broadband mobile network MAC 407 negotiates with the broadband mobile network 415 on the service basic capability of the user terminal 400.

In step 473, the user terminal 400 performs authentication for the broadband mobile network 415.

In step 475, the adaptation module 403 transmits a Registration Request (M_NEM_REQ) signal to the broadband mobile network MAC 407 in order to register the user terminal 400 in the broadband mobile network 415.

Upon receipt of the Registration Request signal, the broadband mobile network MAC 407 registers the user terminal 400 in the broadband mobile network 415 in step 477.

Upon completion of the registration of the user terminal 400, the broadband mobile network MAC 407 transmits a Link-Up Indication signal to the adaptation module 403 in order to report the establishment of a link with the broadband mobile network 415, in step 479.

Upon receipt of the Link-Up Indication signal, the adaptation module 403 transmits a Vertical Handover Link-Up Indication signal to the vertical handover control module 401 in step 481.

In step 483, the user terminal 400 obtains an IP address from a DHCP server.

Thereafter, the user terminal 400 generates a service flow for the broadband mobile network 415 through the broadband mobile network MAC 407 in step 485.

In step 487, the broadband mobile network MAC 407 transmits a Link Handover Complete Indication signal to the adaptation module 403.

Upon receipt of the Link Handover Complete Indication signal, the adaptation module 403 transmits a Vertical Handover Switch Response signal to the vertical handover control module 401 in order to report that the user terminal 400 has connected to the broadband mobile network 415, in step 489.

Upon completion of the connection to the broadband mobile network 415, the user terminal 400 performs binding update and MIP registration in the broadband mobile network 415, in step 491.

Thereafter, the user terminal 400 transmits/receives traffic data to/from the broadband mobile network 415 through the broadband mobile network MAC 407 in step 493.

After completion of the vertical handover to the broadband mobile network 415, the WLAN MAC 405 releases the link with the WLAN 411 and transmits a Link-Down Indication signal to the adaptation module 403, in step 495.

Upon receipt of the Link-Down Indication signal, the adaptation module 403 transmits a Vertical Handover Link-Down Indication signal to the vertical handover control module 401 in order to report the release of the link with the WLAN 411, in step 497.

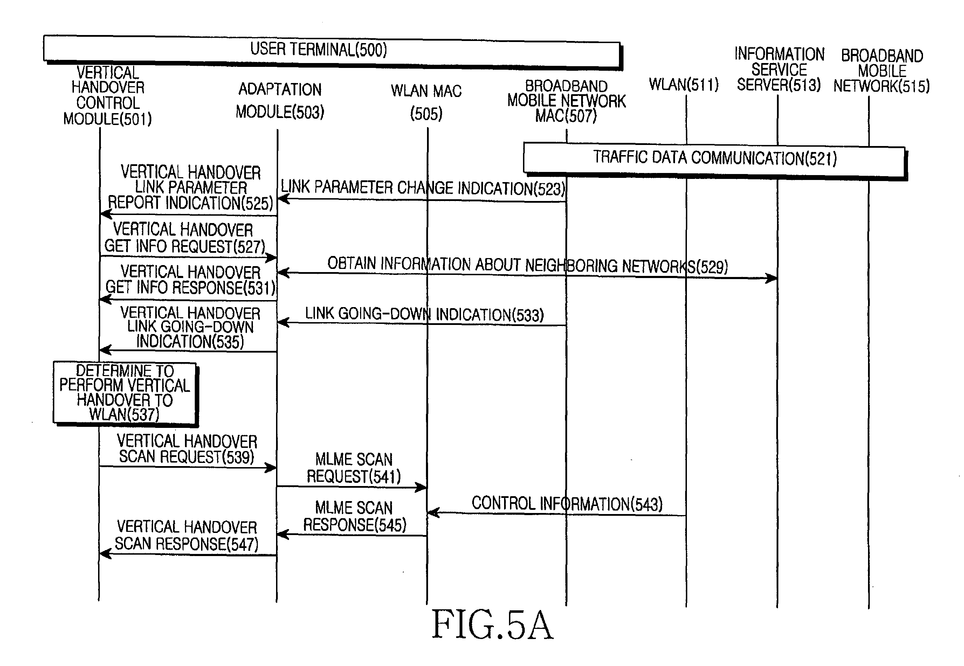

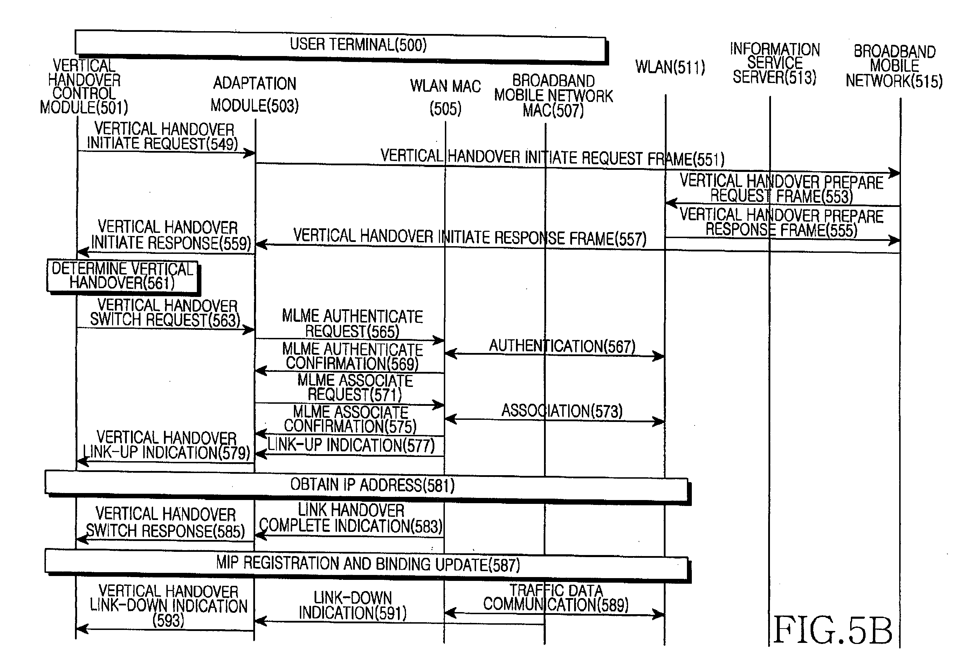

Thereafter, the user terminal selects a network for a vertical handover as illustrated in FIGURE 5A, and performs a vertical handover to the selected network as illustrated in FIGURE 5B.

FIGURE 5A is a diagram illustrating a procedure for selecting a WLAN for a vertical handover from a broadband mobile network according to an embodiment of the present invention.

Referring to FIGURE 5A, a user terminal 500 receives a service through a broadband mobile network 515 in step 521. That is, the user terminal 500 transmits/receives traffic data through the broadband mobile network 515. In this case, the user terminal 500 disables a WLAN MAC 505 that is used to communicate with a WLAN 511.

If a Link Parameter Change event occurs, a broadband mobile network MAC 507 transmits a Link Parameter Change Indication signal to an adaptation module 503 in step 523. That is, if the Link Parameter Change event occurs, the broadband mobile network MAC 507 transmits the Link Parameter Change Indication signal to the adaptation module 503, determining that a wireless link with the broadband mobile network 515 is in a poor state.

Upon receipt of the Link Parameter Change Indication signal, the adaptation module 503 transmits a Vertical Handover Link Parameter Report Indication signal to a vertical handover control module 501 in step 525.

Upon receipt of the Vertical Handover Link Parameter Report Indication signal, the vertical handover control module 501 transmits a Vertical Handover Get Info Request signal to the adaptation module 503 in order to obtain information about neighboring networks from an information service server 513, in step 527.

Upon receipt of the Vertical Handover Get Info Request signal, the adaptation module 503 obtains information about networks neighboring the user terminal 500 from the information service server 513 in step 529. For example, in order to obtain the information about the networks neighboring the user terminal 500, the adaptation module 503 transmits a Get Information Request frame to the information service server 513. In response to the Get Information Request frame, the information service server 513 transmits a Get Information Response frame, including the information about the networks neighboring the user terminal 500, to the adaptation module 503.

In step 531, the adaptation module 503 transmits a Vertical Handover Get Info Response signal, including the information about the networks neighboring the user terminal 500, to the vertical handover control module 501.

Thereafter, by measuring the RX signal strength from the broadband mobile network 515, the broadband mobile network MAC 507 determines whether the user terminal 500 deviates from the coverage of the broadband mobile network 515.

If the user terminal 500 deviates from the coverage of the broadband mobile network 515, the broadband mobile network MAC 507 transmits a Link Going-Down Indication signal to the adaptation module 503 in step 533. For example, if the RX signal strength from the broadband mobile network 515 is smaller than a predetermined reference value, the broadband mobile network MAC 507 determines that the user terminal 500 deviates from the coverage of the broadband mobile network 515.

Upon receipt of the Link Going-Down Indication signal, the adaptation module 503 transmits a Vertical Handover Link Going-Down Indication signal to the vertical handover control module 501 in step 535.

Upon receipt of the Vertical Handover Link Going-Down Indication signal, the vertical handover control module 501 determines whether there is a neighboring WLAN 511 for a vertical handover, using the neighboring network information obtained from the information service server 513, in step 537. If there is the neighboring WLAN 511, the vertical handover control module 501 determines to perform a vertical handover to the WLAN 511.

If there is the neighboring WLAN 511, the vertical handover control module 501 transmits a Vertical Handover Scan Request signal to the adaptation module 503 in order to obtain information about the neighboring WLAN 511, in step 539.

Upon receipt of the Vertical Handover Scan Request signal, the adaptation module 503 enables the WLAN MAC 505 in order to obtain the information about the neighboring WLAN 511. Thereafter, the adaptation module 503 transmits an MLME Scan Request (MLME_Scan_REQ) signal to the WLAN MAC 505 in step 541.

Upon receipt of the MLME Scan Request signal, the WLAN MAC 505 scans and obtains control information of the neighboring WLAN 511 in step 543. For example, the WLAN MAC 505 transmits a Control Information Request (Probe Request) signal to the WLAN 511. Upon receipt of the Control Information Request signal, the WLAN 511 transmits a Control Information Response (Probe Response) signal to the WLAN MAC 505 so that the user terminal 500 can connect to the WLAN 511.

In step 545, the WLAN MAC 505 transmits an MLME Scan Request (MLME_Scan_RSP) signal, including the control information of the neighboring WLAN 511, to the adaptation module 503.

Upon receipt of the MLME Scan Request signal, the adaptation module 503 transmits a Vertical Handover Scan Response signal, including the control information of the neighboring WLAN 511, to the vertical handover control module 501 in step 547.

FIGURE 5B is a diagram illustrating a procedure for performing a vertical handover from the broadband mobile network to the WLAN according to an embodiment of the present invention.

Referring to FIGURE 5B, the vertical handover control module 501 determines a target AP (Access Point) for a vertical handover using the control information of the neighboring WLAN 511, which is included in the Vertical Handover Scan Response signal received from the adaptation module 503. Thereafter, the vertical handover control module 501 transmits a Vertical Handover Initiate Request signal including information about the target AP to the adaptation module 503, in step 549.

Upon receipt of the Vertical Handover Initiate Request signal, the adaptation module 503 transmits a Vertical Handover Initiate Request Frame signal to the broadband mobile network 515 in order to report the vertical handover of the user terminal 500, in step 551.

Upon receipt of the Vertical Handover Initiate Request Frame signal, the broadband mobile network 515 detects the target AP to which the user terminal 500 will be handed over. Thereafter, the broadband mobile network 515 transmits a Vertical Handover Prepare Request Frame signal to the WLAN 511 including the target AP in step 553.

Upon receipt of the Vertical Handover Prepare Request Frame signal, the WLAN 511 determines whether the vertical handover of the user terminal 500 is possible according to the load amount. Thereafter, the WLAN 511 reports the possibility of the vertical handover of the user terminal 500 to the adaptation module 503 through the broadband mobile network 515, in steps 555 and 557. For example, the WLAN 511 transmits a Vertical Handover Prepare Response Frame signal to the broadband mobile network 515 in step 555. Upon receipt of the Vertical Handover Prepare Response Frame signal, the broadband mobile network 515 transmits a Vertical Handover Initiate Response Frame signal to the adaptation module 503 in step 557.

Upon receipt of the Vertical Handover Initiate Response Frame signal, the adaptation module 503 transmits a Vertical Handover Initiate Response signal to the vertical handover control module 501 in step 559.

Upon receipt of the Vertical Handover Initiate Response signal, the vertical handover control module 501 determines the possibility of the vertical handover to the WLAN 511, which is included in the Vertical Handover Initiate Response signal, in step 561.

If the vertical handover to the WLAN 511 is possible, the vertical handover control module 501 transmits a Vertical Handover Switch Request signal to the adaptation module 503 in order to perform the vertical handover of the user terminal 500, in step 563.

Upon receipt of the Vertical Handover Switch Request signal, the adaptation module 503 transmits an MLME Authenticate Request signal to the WLAN MAC 505 in order to establish a link with the WLAN 511, in step 565.

Upon receipt of the MLME Authenticate Request signal, the WLAN MAC 505 authenticates the user terminal 500 for the WLAN 511 in step 567. For example, the WLAN MAC 505 transmits an Authenticate Request signal to the WLAN 511 in order to authenticate the user terminal 500. Upon receipt of the Authenticate Request signal, the WLAN 511 authenticates the user terminal 500 and transmits an Authenticate Response signal to the WLAN MAC 505.

In order to report completion of the authentication of the user terminal 500, the WLAN 505 transmits an MLME Authenticate Confirmation signal to the adaptation module 503 in step 569.

In step 571, the adaptation module 503 transmits an MLME Associate Request signal to the WLAN MAC 505 in order to register the user terminal 500 in the WLAN 511.

Upon receipt of the MLME Associate Request signal, the WLAN MAC 505 registers the user terminal 500 in the WLAN 511 in step 573. For example, the WLAN MAC 505 transmits an Associate Request signal to the WLAN 511 in order to register the user terminal 500. Upon receipt of the Associate Request signal, the WLAN 511 registers the user terminal 500 and transmits an Associate Response signal to the WLAN MAC 505.

Upon completion of the registration of the user terminal 500, the WLAN MAC 505 transmits an MLME Associate Confirmation signal to the adaptation module 503 in order to report the registration of the user terminal 500, in step 575.

In step 577, the WLAN MAC 505 transmits a Link-Up Indication signal to the adaptation module 503 in order to report the establishment of a link with the WLAN 511.

Upon receipt of the Link-Up Indication signal, the adaptation module 503 transmits a Vertical Handover Link-Up Indication signal to the vertical handover control module 501 in step 579.

In step 581, the user terminal 500 obtains an IP address from a DHCP server.

In step 583, the WLAN MAC 505 transmits a Link Handover Complete Indication signal to the adaptation module 503.

Upon receipt of the Link Handover Complete Indication signal, the adaptation module 503 transmits a Vertical Handover Switch Response signal to the vertical handover control module 501 in order to report that the user terminal 500 has connected to the WLAN 511, in step 585.

Upon completion of the connection to the WLAN 511, the user terminal 500 performs binding update and MIP registration in the WLAN 511, in step 587.

Thereafter, the user terminal 500 transmits/receives traffic data to/from the WLAN 511 through the WLAN MAC 505 in step 589.

After completion of the vertical handover to the WLAN 511, the broadband mobile network MAC 507 releases the link with the broadband mobile network 515 and transmits a Link-Down Indication signal to the adaptation module 503, in step 591.

Upon receipt of the Link-Down Indication signal, the adaptation module 503 transmits a Vertical Handover Link-Down Indication signal to the vertical handover control module 501 in order to report the release of the link with the broadband mobile network 515, in step 593.

As described above, if the wireless communication system supports the vertical handover of the user terminal, there is the MD-SAP (Media Dependent Service Access Point) between the adaptation module and each MAC interface, which is defined according to the MAC interface. Therefore, the adaptation module performs communication with each MAC interface using a signal defined according to each MAC type depending on the MD-SAP. For example, an MD-SAP between the WLAN MAC and the adaptation module uses a signal defined in the MLME SAP of the IEEE 802.11 standards. Also, an MD-SAP between the broadband mobile network MAC and the adaptation module uses a signal defined in the C_SAP Primitives of the IEEE 802.16g standards.

The MD-SAP provides a signal to ling up with the MAC interface, under the control of an upper layer (e.g., the vertical handover control module and the adaptation module) in the user terminal. For example, upon receipt of the Vertical Handover Switch Request signal from the vertical handover control module 401, the adaptation module 403 links up with the broadband mobile network MAC 407 through the MD-SAP of the broadband mobile network.

As described above, in the wireless communication system, the user terminal uses an MD-SAP defined according to each MAC interface. However, because the MD-SAP operates in the user terminal, the MD-SAP can be substituted with a Common Media Dependent Service Access Point (CMD-SAP) as defined in Tables1 and 2.

**Table 1**

| | Vertical Handover Primitives | MD-SAP primitives | CMD-SAP primitives |
|---|---|---|---|
| Broadband Mobile Network (IEEE 802.16) | Vertical Handover Scan-request/response | C-HO-REQ/RSP | CMD-SCAN-REQ/RSP |
| | Vertical Handover_Switch-request/response | C-NEM-REQ/RSP (for ranging) | CMD-Link-Up-REQ/RSP |
| | | M-NEM-REQ/RSP (for register) | |
| WLAN (IEEE 802.11) | Vertical Handover Scan-request/response | MLME-Scan-Request/Confirm | CMD-SCAN-REQ/RSP |
| | Vertical Handover_Switch-request/response | MLME-Authenticate-Request/Confirm | CMD-Link-Up-REQ/RSP |
| | | MLME-Associate-Request/Confirm | |

As shown in Table 1, an MD-SAP defined in the standards of the broadband mobile network and the WLAN can be defined as a CMD-SAP.

In this case, fields of the CMD-SAP can be defined as Table 2.

**Table 2**

| | Primitive | Description |
|---|---|---|
| 1 | CMD-SCAN-REQ/RSP | Upper layers can command autonomous scanning with vertical handover SCAN primitive. On receipt of this primitive, adaptation module control link scan with CMD-SCAN-REQ/RSP to the related interface |
| 2 | CMD-Link-Up-REQ/RSP | Upper layers can control Link setup procedure with vertical handover Switch primitive. On receipt of this primitive, adaptation module control link setup with CMD-Link-Up-REQ/RSP. For example, 802.16 link setup procedure is a series of ranging, SBC, authentication and register, and 802.11 link setup procedure is authentication and association. |

As shown in Tables 1 and 2, the Handover Request/Response signal (C-HO-REQ/RSP) and the MLME Scan Request/Confirm signal (MLME-Scan-Request/Confirm), which are used for the vertical handover scanning in FIGURES 4 through 7, can be substituted with a Common Scan Request/Response signal (CMD-SCAN-REQ/RSP) in the CMD-SAP. Also, the signals for the vertical handover switching in FIGURES 4 through 7 can be substituted with a Common Link-Up Request/Response signal (CMD-Link-Up-REQ/RSP) in the CMD-SAP. The Common Scan Request/Response signal can be compatibly used in the broadband mobile network MAC and the WLAN MAC.

Hereinafter, a description is given of a procedure for performing a vertical handover in the wireless communication system by using the CMD-SAP according to another embodiment of the present invention.

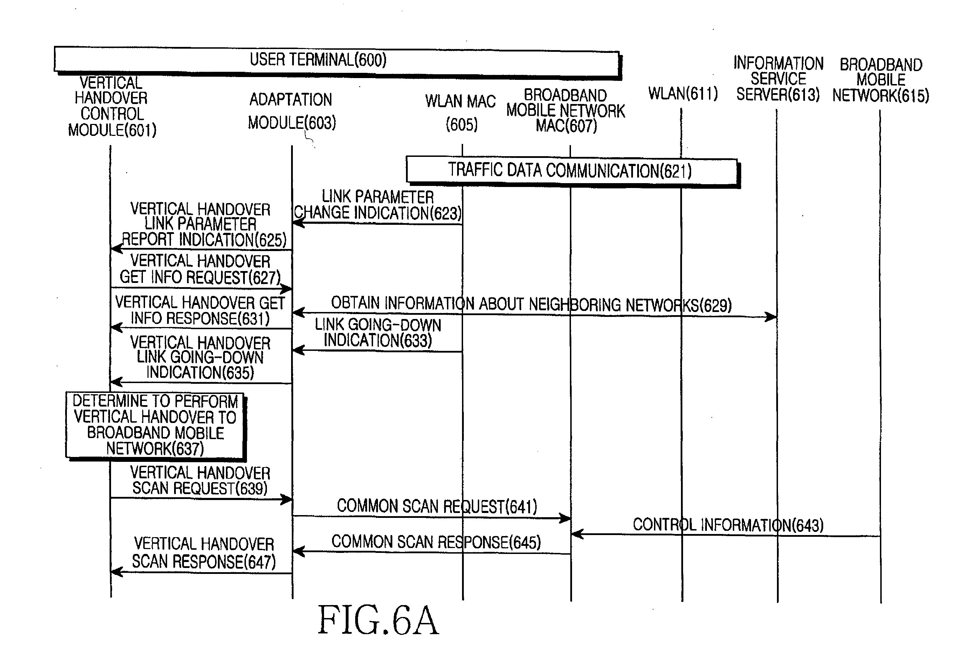

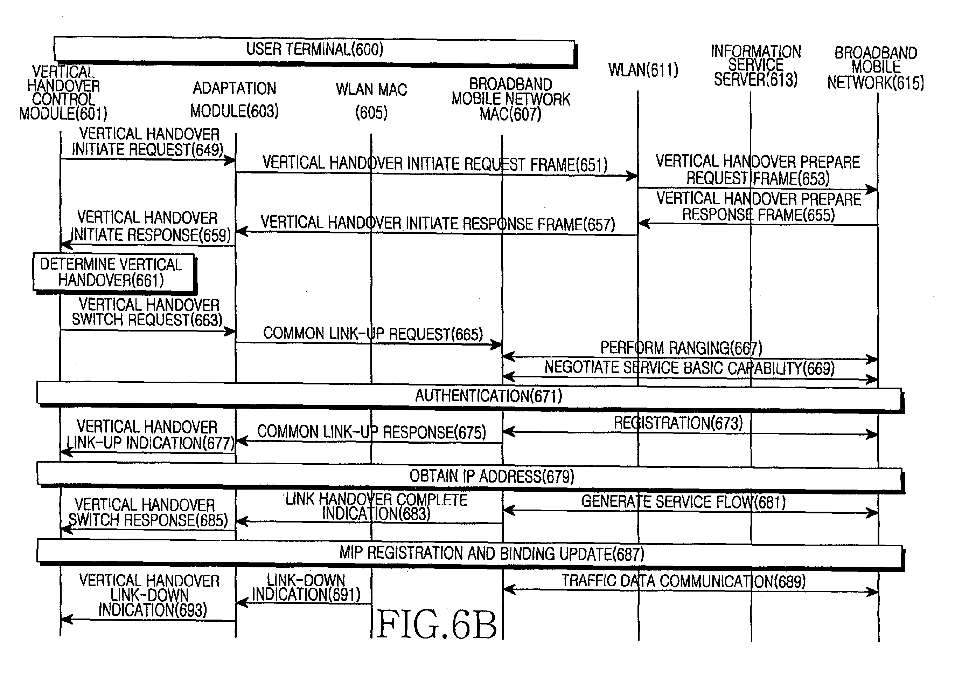

FIGURES 6A and 6B illustrate a procedure for performing a vertical handover from a WLAN (i.e., a serving network) to a broadband mobile network (i.e., a target network) according to another embodiment of the present invention.

FIGURE 6A is a diagram illustrating a procedure for selecting a broadband mobile network for a vertical handover from a WLAN according to another embodiment of the present invention.

Referring to FIGURE 6A, a user terminal 600 receives a service through a WLAN 611 in step 621. That is, the user terminal 600 transmits/receives traffic data through the WLAN 611. In this case, the user terminal 600 disables a broadband mobile network MAC 607 that is used to communicate with a broadband mobile network 615.

If a Link Parameter Change event occurs, a WLAN MAC 605 transmits a Link Parameter Change Indication signal to an adaptation module 603 in step 623. That is, if the Link Parameter Change event occurs, the WLAN MAC 605 transmits the Link Parameter Change Indication signal to the adaptation module 603, determining that a wireless link with the WLAN 611 is in a poor state.

Upon receipt of the Link Parameter Change Indication signal, the adaptation module 603 transmits a Vertical Handover Link Parameter Report Indication signal to a vertical handover control module 601 in step 625.

Upon receipt of the Vertical Handover Link Parameter Report Indication signal, the vertical handover control module 601 transmits a Vertical Handover Get Info Request signal to the adaptation module 603 in order to obtain information about neighboring networks, in step 627.

Upon receipt of the Vertical Handover Get Info Request signal, the adaptation module 603 obtains information about networks neighboring the user terminal 600 from the information service server 613 in step 629. For example, in order to obtain the information about the networks neighboring the user terminal 600, the adaptation module 603 transmits a Get Information Request frame to an information service server 613. In response to the Get Information Request frame, the information service server 613 transmits a Get Information Response frame, including the information about the networks neighboring the user terminal 600, to the adaptation module 603.

In step 631, the adaptation module 603 transmits a Vertical Handover Get Info Response signal, including the information about the networks neighboring the user terminal 600, to the vertical handover control module 601.

Thereafter, by measuring the RX signal strength from the WLAN 611, the WLAN MAC 605 determines whether the user terminal 600 deviates from the coverage of the WLAN 611.

If the user terminal 600 deviates from the coverage of the WLAN 611, the WLAN MAC 605 transmits a Link Going-Down Indication signal to the adaptation module 603 in step 633. For example, if the RX signal strength from the WLAN 611 is smaller than a predetermined reference value, the WLAN MAC 605 determines that the user terminal 600 deviates from the coverage of the WLAN 611.

Upon receipt of the Link Going-Down Indication signal, the adaptation module 603 transmits a Vertical Handover Link Going-Down Indication signal to the vertical handover control module 601 in step 635.

Upon receipt of the Vertical Handover Link Going-Down Indication signal, the vertical handover control module 601 determines whether there is a neighboring broadband mobile network 615 for a vertical handover, using the neighboring network information obtained from the information service server 613, in step 637. If there is the neighboring broadband mobile network 615, the vertical handover control module 601 determines to perform a vertical handover to the broadband mobile network 615.

If there is the neighboring broadband mobile network 615, the vertical handover control module 601 transmits a Vertical Handover Scan Request signal to the adaptation module 603 in order to obtain information about the broadband mobile network 615, in step 639.

Upon receipt of the Vertical Handover Scan Request signal, the adaptation module 603 enables the broadband mobile network MAC 607 in order to communicate with the broadband mobile network 615. Thereafter, in order to obtain information about the broadband mobile network 615, the adaptation module 603 transmits a Common Scan Request (CMD_SCAN_REQ) signal to the broadband mobile network MAC 607 in step 641.

Upon receipt of the Common Scan Request signal, the broadband mobile network MAC 607 scans and collects a broadcast signal of the broadband mobile network 615 in step 643. The broadcast signal includes a downlink MAP signal, an uplink MAP signal, a Downlink Channel Descriptor (DCD) signal, and an Uplink Channel Descriptor (UCD) signal.

In step 645, the broadband mobile network MAC 607 transmits a Common Scan Response (CMD_SCAN_RSP) signal, including the broadcast signal of the broadband mobile network 615, to the adaptation module 603.

Upon receipt of the Common Scan Response signal, the adaptation module 603 transmits a Vertical Handover Scan Response signal, including the broadcast signal of the neighboring broadband mobile network 615, to the vertical handover control module 601 in step 647.

FIGURE 6B is a diagram illustrating a procedure for performing a vertical handover from the WLAN to the broadband mobile network according to another embodiment of the present invention.

Referring to FIGURE 6B, the vertical handover control module 601 determines a target RAS for a vertical handover using the broadcast signal of the neighboring broadband mobile network 615, which is included in the Vertical Handover Scan Response signal received from the adaptation module 603. Thereafter, the vertical handover control module 601 transmits a Vertical Handover Initiate Request signal including information about the target RAS to the adaptation module 603, in step 649.

Upon receipt of the Vertical Handover Initiate Request signal, the adaptation module 603 transmits a Vertical Handover Initiate Request Frame signal to the WLAN 611 in order to report the vertical handover of the user terminal 600, in step 651.

Upon receipt of the Vertical Handover Initiate Request Frame signal, the WLAN 611 detects the target RAS to which the user terminal 600 will be handed over. Thereafter, the WLAN 611 transmits a Vertical Handover Prepare Request Frame signal to the broadband mobile network 615 including the target RAS in step 635.

Upon receipt of the Vertical Handover Prepare Request Frame signal, the broadband mobile network 615 determines whether the vertical handover of the user terminal 600 is possible according to the load amount. Thereafter, the broadband mobile network 615 reports the possibility of the vertical handover of the user terminal 600 to the adaptation module 603 through the WLAN 611, in steps 655 and 657. For example, the broadband mobile network 615 transmits a Vertical Handover Prepare Response Frame signal to the WLAN 611 in step 655. Upon receipt of the Vertical Handover Prepare Response Frame signal, the WLAN 611 transmits a Vertical Handover Initiate Response Frame signal to the adaptation module 603 in step 657.

Upon receipt of the Vertical Handover Initiate Response Frame signal, the adaptation module 603 transmits a Vertical Handover Initiate Response signal to the vertical handover control module 601 in step 659.

Upon receipt of the Vertical Handover Initiate Response signal, the vertical handover control module 601 determines the possibility of the vertical handover to the broadband mobile network 615, which is included in the Vertical Handover Initiate Response signal, in step 661.

If the vertical handover to the broadband mobile network 615 is possible, the vertical handover control module 601 transmits a Vertical Handover Switch Request signal to the adaptation module 603 in order to perform the vertical handover of the user terminal 600, in step 663.

Upon receipt of the Vertical Handover Switch Request signal, the adaptation module 603 transmits a Common Link-Up Request (CMD Link_Up_REQ) signal to the broadband mobile network MAC 607 in order to establish a link with the broadband mobile network 615, in step 665.

Upon receipt of the Common Link-Up Request signal, the broadband mobile network MAC 607 performs ranging with the broadband mobile network 615 using the control information of the broadband mobile network 615, in step 667.

In step 669, the broadband mobile network MAC 607 negotiates with the broadband mobile network 615 on the service basic capability of the user terminal 600.

In step 671, the user terminal 600 performs authentication for the broadband mobile network 615.

Thereafter, the broadband mobile network MAC 607 registers the user terminal 600 in the broadband mobile network 615 in step 673.

Upon completion of the registration of the user terminal 600, the broadband mobile network MAC 607 transmits a Common Link-Up Response (CMD_Link_Up_RSP) signal to the adaptation module 603 in order to report the establishment of a link with the broadband mobile network 615, in step 675.

Upon receipt of the Common Link-Up Response signal, the adaptation module 603 transmits a Vertical Handover Link-Up Indication signal to the vertical handover control module 601 in step 677.

In step 679, the user terminal 600 obtains an IP address from a DHCP server.

Thereafter, the user terminal 600 generates a service flow for the broadband mobile network 615 through the broadband mobile network MAC 607 in step 681.

In step 683, the broadband mobile network MAC 607 transmits a Link Handover Complete Indication signal to the adaptation module 603.

Upon receipt of the Link Handover Complete Indication signal, the adaptation module 603 transmits a Vertical Handover Switch Response signal to the vertical handover control module 601 in order to report that the user terminal 600 has connected to the broadband mobile network 615, in step 685.

Upon completion of the connection to the broadband mobile network 615, the user terminal 600 performs binding update and MIP registration in the broadband mobile network 615, in step 687.

Thereafter, the user terminal 600 transmits/receives traffic data to/from the broadband mobile network 615 through the broadband mobile network MAC 607 in step 689.

After completion of the vertical handover to the broadband mobile network 615, the WLAN MAC 605 releases the link with the WLAN 611 and transmits a Link-Down Indication signal to the adaptation module 603, in step 691.

Upon receipt of the Link-Down Indication signal, the adaptation module 603 transmits a Vertical Handover Link-Down Indication signal to the vertical handover control module 601 in order to report the release of the link with the WLAN 611, in step 693.

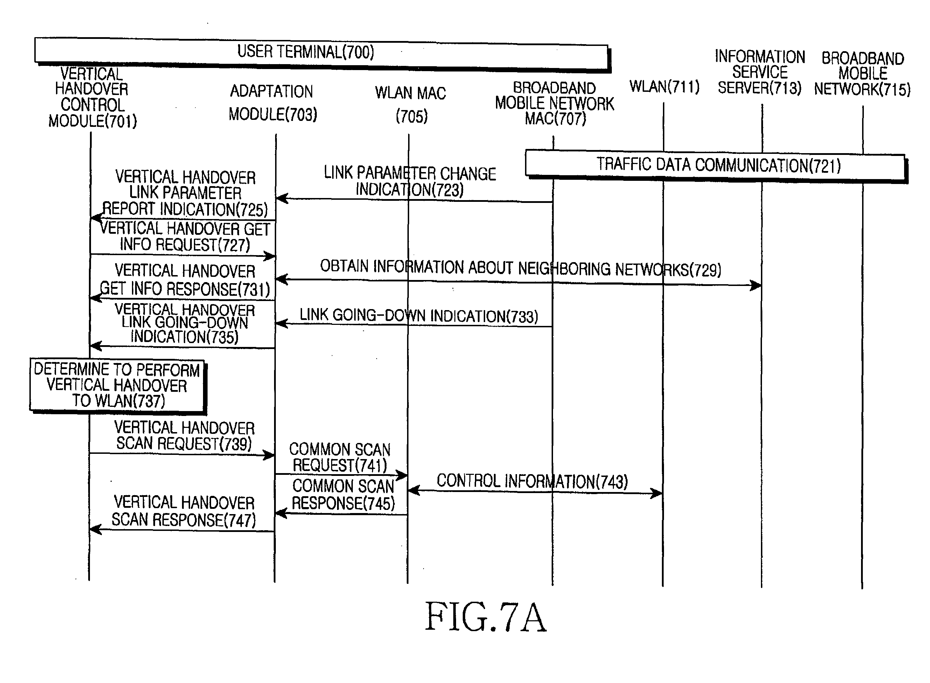

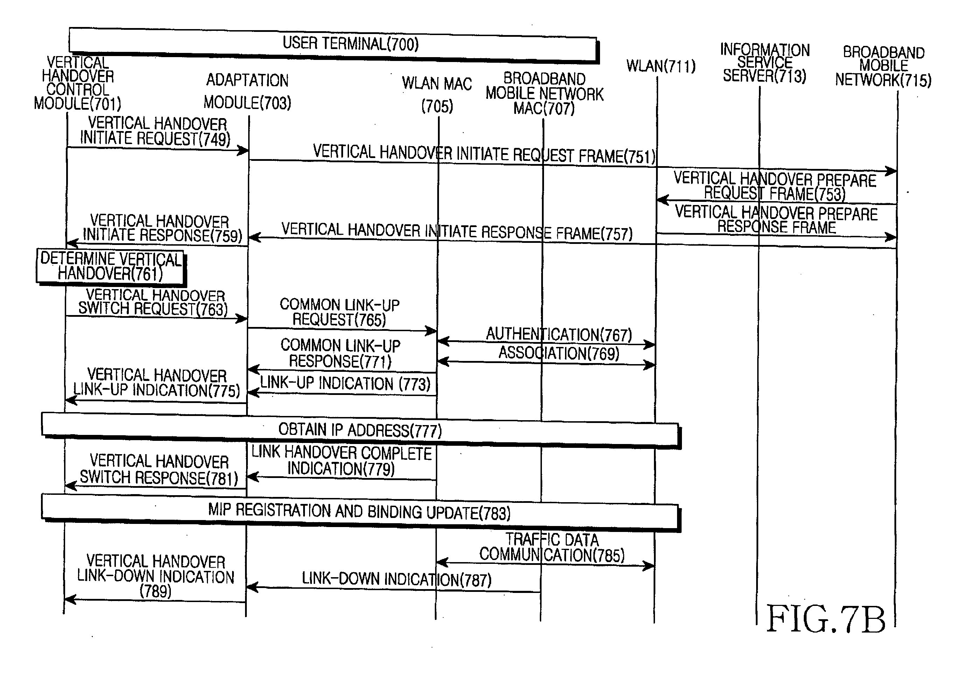

Thereafter, the user terminal selects a network for a vertical handover as illustrated in FIGURE 7A, and performs a vertical handover to the selected network as illustrated in FIGURE 7B.

FIGURE 7A is a diagram illustrating a procedure for selecting a WLAN for a vertical handover from a broadband mobile network according to another embodiment of the present invention.

Referring to FIGURE 7A, a user terminal 700 receives a service through a broadband mobile network 715 in step 721. That is, the user terminal 700 transmits/receives traffic data through the broadband mobile network 715. In this case, the user terminal 700 disables a WLAN MAC 705 that is used to communicate with a WLAN 711.

If a Link Parameter Change event occurs, a broadband mobile network MAC 707 transmits a Link Parameter Change Indication signal to an adaptation module 703 in step 723. That is, if the Link Parameter Change event occurs, the broadband mobile network MAC 707 transmits the Link Parameter Change Indication signal to the adaptation module 703, determining that a wireless link with the broadband mobile network 715 is in a poor state.

Upon receipt of the Link Parameter Change Indication signal, the adaptation module 703 transmits a Vertical Handover Link Parameter Report Indication signal to a vertical handover control module 701 in step 725.

Upon receipt of the Vertical Handover Link Parameter Report Indication signal, the vertical handover control module 701 transmits a Vertical Handover Get Info Request signal to the adaptation module 703 in order to obtain information about neighboring networks from an information service server 713, in step 727.

Upon receipt of the Vertical Handover Get Info Request signal, the adaptation module 703 obtains information about networks neighboring the user terminal 700 from the information service server 713 in step 729. For example, in order to obtain the information about the networks neighboring the user terminal 700, the adaptation module 703 transmits a Get Information Request frame to the information service server 713. In response to the Get Information Request frame, the information service server 713 transmits a Get Information Response frame, including the information about the networks neighboring the user terminal 700, to the adaptation module 703.

In step 731, the adaptation module 703 transmits a Vertical Handover Get Info Response signal, including the information about the networks neighboring the user terminal 700, to the vertical handover control module 701.

Thereafter, by measuring the RX signal strength from the broadband mobile network 715, the broadband mobile network MAC 707 determines whether the user terminal 700 deviates from the coverage of the broadband mobile network 715.

If the user terminal 700 deviates from the coverage of the broadband mobile network 715, the broadband mobile network MAC 707 transmits a Link Going-Down Indication signal to the adaptation module 703 in step 733. For example, if the RX signal strength from the broadband mobile network 715 is smaller than a predetermined reference value, the broadband mobile network MAC 707 determines that the user terminal 700 deviates from the coverage of the broadband mobile network 715.

Upon receipt of the Link Going-Down Indication signal, the adaptation module 703 transmits a Vertical Handover Link Going-Down Indication signal to the vertical handover control module 701 in step 735.

Upon receipt of the Vertical Handover Link Going-Down Indication signal, the vertical handover control module 701 determines whether there is a neighboring WLAN 711 for a vertical handover, using the neighboring network information obtained from the information service server 713, in step 737. If there is the neighboring WLAN 711, the vertical handover control module 701 determines to perform a vertical handover to the WLAN 711.

If there is the neighboring WLAN 711, the vertical handover control module 701 transmits a Vertical Handover Scan Request signal to the adaptation module 703 in order to obtain information about the neighboring WLAN 711, in step 739.

Upon receipt of the Vertical Handover Scan Request signal, the adaptation module 703 enables the WLAN MAC 705 in order to communicate with the WLAN 711. Thereafter, the adaptation module 703 transmits a Common Scan Request (CMD_SCAN_REQ) signal to the WLAN MAC 705 in step 741.

Upon receipt of the Common Scan Request signal, the WLAN MAC 705 scans and obtains control information of the neighboring WLAN 711 in step 743. For example, the WLAN MAC 705 transmits a Control Information Request (Probe Request) signal to the WLAN 711. Upon receipt of the Control Information Request signal, the WLAN 711 transmits a Control Information Response (Probe Response) signal to the WLAN MAC 705 so that the user terminal 700 can connect to the WLAN 711.

In step 745, the WLAN MAC 705 transmits a Common Scan Response (CMD_SCAN_RSP) signal, including the control information of the WLAN 711, to the adaptation module 703.

Upon receipt of the Common Scan Response signal, the adaptation module 703 transmits a Vertical Handover Scan Response signal, including the control information of the neighboring WLAN 711, to the vertical handover control module 701 in step 747.

FIGURE 7B is a diagram illustrating a procedure for performing a vertical handover from the broadband mobile network to the WLAN according to another embodiment of the present invention.

Referring to FIGURE 7B, the vertical handover control module 701 determines a target AP (Access Point) for a vertical handover using the control information of the neighboring WLAN 711, which is included in the Vertical Handover Scan Response signal received from the adaptation module 703. Thereafter, the vertical handover control module 701 transmits a Vertical Handover Initiate Request signal including information about the target AP to the adaptation module 703, in step 749.

Upon receipt of the Vertical Handover Initiate Request signal, the adaptation module 703 transmits a Vertical Handover Initiate Request Frame signal to the broadband mobile network 715 in order to report the vertical handover of the user terminal 700, in step 751.

Upon receipt of the Vertical Handover Initiate Request Frame signal, the broadband mobile network 715 detects the target AP to which the user terminal 700 will be handed over. Thereafter, the broadband mobile network 715 transmits a Vertical Handover Prepare Request Frame signal to the WLAN 711 of the target AP in step 753.

Upon receipt of the Vertical Handover Prepare Request Frame signal, the WLAN 711 determines whether the vertical handover of the user terminal 700 is possible according to the load amount. Thereafter, the WLAN 711 reports the possibility of the vertical handover of the user terminal 700 to the adaptation module 703 through the broadband mobile network 715, in steps 755 and 757. For example, the WLAN 711 transmits a Vertical Handover Prepare Response Frame signal to the broadband mobile network 715 in step 755. Upon receipt of the Vertical Handover Prepare Response Frame signal, the broadband mobile network 715 transmits a Vertical Handover Initiate Response Frame signal to the adaptation module 703 in step 757.

Upon receipt of the Vertical Handover Initiate Response Frame signal, the adaptation module 703 transmits a Vertical Handover Initiate Response signal to the vertical handover control module 701 in step 759.

Upon receipt of the Vertical Handover Initiate Response signal, the vertical handover control module 701 determines the possibility of the vertical handover to the WLAN 711, which is included in the Vertical Handover Initiate Response signal, in step 761.

If the vertical handover to the WLAN 711 is possible, the vertical handover control module 701 transmits a Vertical Handover Switch Request signal to the adaptation module 703 in order to perform the vertical handover of the user terminal 700, in step 763.

Upon receipt of the Vertical Handover Switch Request signal, the adaptation module 703 transmits a Common Link-Up Request (CMD_Link_Up_REQ) signal to the WLAN MAC 705 in order to establish a link with the WLAN 711, in step 765.

Upon receipt of the Common Link-Up Request signal, the WLAN MAC 705 authenticates the user terminal 700 for the WLAN 711 using the control information of the WLAN 11, in step 767. For example, the WLAN MAC 705 transmits an Authenticate Request signal to the WLAN 711 in order to authenticate the user terminal 700. Upon receipt of the Authenticate Request signal, the WLAN 711 authenticates the user terminal 700 and transmits an Authenticate Response signal to the WLAN MAC 705.

After completion of the authentication of the user terminal 700, the WLAN MAC 705 registers the user terminal 700 in the WLAN 711 in step 769. For example, the WLAN MAC 705 transmits an Associate Request signal to the WLAN 711 in order to register the user terminal 700. Upon receipt of the Associate Request signal, the WLAN 711 registers the user terminal 700 and transmits an Associate Response signal to the WLAN MAC 705.

Upon completion of the registration of the user terminal 700, the WLAN MAC 705 transmits a Common Link-Up Response (CMD_Link_Up_RSP) signal to the adaptation module 703 in order to report the registration of the user terminal 700, in step 771.

In step 773, the WLAN MAC 705 transmits a Link-Up Indication signal to the adaptation module 703 in order to report the establishment of a link with the WLAN 711.

Upon receipt of the Link-Up Indication signal, the adaptation module 703 transmits a Vertical Handover Link-Up Indication signal to the vertical handover control module 701 in step 775.

In step 777, the user terminal 700 obtains an IP address from a DHCP server.

In step 779, the WLAN MAC 705 transmits a Link Handover Complete Indication signal to the adaptation module 703.

Upon receipt of the Link Handover Complete Indication signal, the adaptation module 703 transmits a Vertical Handover Switch Response signal to the vertical handover control module 701 in order to report that the user terminal 700 has connected to the WLAN 711, in step 781.

Upon completion of the connection to the WLAN 711, the user terminal 700 performs binding update and MIP registration in the WLAN 711, in step 783.

Thereafter, the user terminal 700 transmits/receives traffic data to/from the WLAN 711 through the WLAN MAC 705 in step 785.

After completion of the vertical handover to the WLAN 711, the broadband mobile network MAC 707 releases the link with the broadband mobile network 715 and transmits a Link-Down Indication signal to the adaptation module 703, in step 787.

Upon receipt of the Link-Down Indication signal, the adaptation module 703 transmits a Vertical Handover Link-Down Indication signal to the vertical handover control module 701 in order to report the release of the link with the broadband mobile network 715, in step 789.

In the above embodiments, the user terminal disconnects the link with the serving network after it links up with the target network for the vertical handover. In alternative embodiments, the user terminal may disconnect the link with the serving network before it links up with the target network for the vertical handover.

As described above, the present invention makes it possible to perform a vertical handover in the multi-network wireless communication system. Therefore, a seamless vertical handover can be provided and the vertical handover procedure can be simplified using the CMD-SAP.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for a vertical handover of a user terminal in a wireless communication system; the method comprising:
selecting, at a vertical handover control module, a target network for a vertical handover using information about neighboring networks obtained from an information service server through an adaptation module;
if the target network is different from a serving network, requesting collection of target network information from the vertical handover control module to a target network interface communicating with the target network through the adaptation module;
transmitting the target network information collected in response to the information collection request from the target network interface to the vertical handover control module; and
determining, at the vertical handover control module, a target base station using the collected target network information.

2. The method of claim 1, wherein if a link change event occurs in a physical layer, a serving network interface communicating with the serving network requests information about neighboring networks to the vertical handover control module through the adaptation module; and
the vertical handover control module obtains the information about the neighboring networks from the information service server through the adaptation module in response to the neighboring network information request from the serving network interface.

3. The method of claim 1, wherein selecting the target network comprises:
requesting the information about the neighboring networks from the vertical handover control module to the adaptation module;
in response to the neighboring information request from the vertical handover control module, obtaining, at the adaptation module, the information about the neighboring networks from the information service server and transmitting the obtained neighboring network information from the adaptation module to the vertical handover control module;
if the strength of a signal received from the serving network is smaller than a predetermined reference value, requesting a vertical handover from a serving network interface to the vertical handover control module through the adaptation module; and
selecting, at the vertical handover control module, a target network for a vertical handover from the neighboring network information in response to the vertical handover request.

4. The method of claim 1, further comprising, after the determination of the target base station:
requesting a link-up with the target base station from the vertical handover control module to the adaptation module;
connecting a link with the target base station through the target network interface by the adaptation module in response to the link-up request;
upon completion of the link-up with the target base station, receiving, at the adaptation module, an IP address for communication with the target base station and performing binding update and registration of the IP address in the target base station; and
upon completion of the IP address registration and the binding update, receiving traffic data from the target base station at the target network interface.

5. A method for a vertical handover of a user terminal from a wireless local area network (WLAN) to a broadband mobile network in a wireless communication system, the method comprising:
selecting, at a vertical handover control module, a target network for a vertical handover using information about neighboring networks obtained from an information service server through an adaptation module;
if the target network is the broadband mobile network, requesting collection of information about the broadband mobile network from the vertical handover control module to a first interface communicating with the broadband mobile network through the adaptation module;
transmitting the information about the broadband mobile network collected in response to the information collection request from the first interface to the vertical handover control module; and
determining, at the vertical handover control module, a target base station using the information of the broadband mobile network.

6. The method of claim 5, wherein if a link change event occurs in a physical layer, a second interface communicating with the WLAN requests information about neighboring networks to the vertical handover control module through the adaptation module; and
the vertical handover control module obtains the informatio n about the neighboring networks from the information service ser ver through the adaptation module in response to the neighboring network information request from the second interface.

7. The method of claim 5, wherein selecting the target network comprises:
requesting the information about the neighboring networks from the vertical handover control module to the adaptation module;
in response to the neighboring information request from the vertical handover control module, obtaining, at the adaptation module, the information about the neighboring networks from the information service server and transmitting the obtained neighboring network information from the adaptation module to the vertical handover control module;
if the strength of a signal received from the WLAN is smaller than a predetermined reference value, requesting a vertical handover from a second interface communicating with the WLAN to the vertical handover control module through the adaptation module; and
selecting, at the vertical handover control module, a target network for a vertical handover from the neighboring network information in response to the vertical handover request.

8. The method of claim 5, further comprising, after the determination of the target base station:
requesting a link-up with the target base station from the vertical handover control module to the adaptation module;
connecting a link with the target base station through the first interface by the adaptation module in response to the link-up request;
upon completion of the link-up with the target base station, receiving, at the adaptation module, an IP address for communication with the target base station and performing binding update and registration of the IP address in the target base station; and
upon completion of the IP address registration and the binding update, receiving traffic data from the target base station at the first interface.

9. The method of claim 8, wherein the link-up comprises:
transmitting a common link-up request signal from the adaptation module to the first interface;
connecting a link with the target base station by the first interface upon receipt of the common link-up request signal; and
transmitting a common link-up response signal from the first interface to the adaptation module after the link-up with the target base station.

10. The method of claim 9, wherein the common link-up request signal and the common link-up response signal are defined to be shared by a serving network and a target network.

11. The method of claim 8, wherein the link-up comprises:
transmitting a ranging request signal from the adaptation module to the first interface;
in response to the ranging request signal, performing ranging to the target base station and transmitting a ranging complete signal to the adaptation module;
performing, at the first interface, authentication and negotiation of the service basic capability with the target base station; and
upon receipt of a registration request signal from the adaptation module, performing, at the first interface, registration in the target base station and transmitting a registration complete signal to the adaptation module.

12. A method for a vertical handover of a user terminal from a broadband mobile network to a wireless local area network (WLAN) in a wireless communication system, the method comprising:
selecting, at a vertical handover control module, a target network for a vertical handover using information about neighboring networks obtained from an information service server through an adaptation module;
if the target network is the WLAN, requesting collection of information about the WLAN from the vertical handover control module to a first interface communicating with the WLAN through the adaptation module;
transmitting the information about the WLAN collected in response to the information collection request from the first interface to the vertical handover control module; and
determining, at the vertical handover control module, a target base station using the information of the WLAN.

13. The method of claim 12, wherein if a link change event occurs in a physical layer, a second interface communicating with the broadband mobile network requests information about neighboring networks to the vertical handover control module through the adaptation module; and
the vertical handover control module obtains the information about the neighboring networks from the information service server through the adaptation module in response to the neighboring network information request from the second interface.

14. The method of claim 12, wherein selecting the target network comprises:
requesting the information about the neighboring networks from the vertical handover control module to the adaptation module;
in response to the neighboring information request from the vertical handover control module, obtaining, at the adaptation module, the information about the neighboring networks from the information service server and transmitting the obtained neighboring network information from the adaptation module to the vertical handover control module;
if the strength of a signal received from the broadband mobile network is smaller than a predetermined reference value, requesting a vertical handover from a second interface communicating with the broadband mobile network to the vertical handover control module through the adaptation module; and
selecting, at the vertical handover control module, a target network for a vertical handover from the neighboring network information in response to the vertical handover request.

15. The method of claim 12, further comprising, after the determination of the target base station:
requesting a link-up with the target base station from the vertical handover control module to the adaptation module;
connecting a link with the target base station through the first interface by the adaptation module in response to the link-up request;
upon completion of the link-up with the target base station, receiving, at the adaptation module, an IP address for communication with the target base station and performing binding update and registration of the IP address in the target base station; and
upon completion of the IP address registration and the binding update, receiving traffic data from the target base station at the first interface.

16. The method of claim 15, wherein the link-up comprises:
transmitting a common link-up request signal from the adaptation module to the first interface;
connecting a link with the target base station by the first interface upon receipt of the common link-up request signal; and
transmitting a common link-up response signal from the first interface to the adaptation module after the link-up with the target base station.

17. The method of claim 16, wherein the common link-up request signal and the common link-up response signal are defined to be shared by a serving network and a target network.

18. The method of claim 15, wherein the link-up comprises:
transmitting an authentication request signal from the adaptation module to the first interface in response to the link-up request;
in response to the authentication request signal, performing authentication with the target base station and transmitting an authentication complete signal to the adaptation module;
in response to the authentication complete signal, transmitting a registration request signal from the adaptation module to the first interface; and
upon receipt of the registration request signal, performing , at the first interface, registration in the target base station and transmitting a registration complete signal to the adaptatio n module.

19. An apparatus for a user terminal in a multi-network wireless communication system, the apparatus comprising:
a first Media Access Control (MAC) layer for communicating with a serving network and transmitting a neighboring network information request signal to an adaptation module if a link change event occurs in a physical layer;
one or more second MAC layers for communicating with other networks than the serving network;
the adaptation module for converting a signal, received from the first MAC layer and the second MAC layers, into the format defined for media independent signal processing and transmitting the resulting signal to a vertical handover control module; and
the vertical handover control module for performing a control operation for obtaining information about neighboring networks, upon receipt of the neighboring network information request signal from the adaptation module.

20. The apparatus of claim 19, wherein the vertical handover control module transmits a neighboring network information request signal to the adaptation module upon receipt of the neighboring network information request signal;
the adaptation module obtains information about networks neighboring the user terminal upon receipt of the neighboring network information request signal and transmits the obtained information to the vertical handover control module; and
the vertical handover control module selects a target network for a vertical handover from the neighboring network information.

21. The apparatus of claim 20, wherein the first MAC layer transmits a vertical handover request signal to the vertical handover control module through the adaptation module after the selection of the target network, if the strength of a signal received from a serving network is smaller than a predetermined reference value;
upon receipt of the vertical handover request signal, the vertical handover control module transmits a target network information collection request signal to a target network MAC layer communicating with the target network among the second MAC layers through the adaptation module; and
upon receipt of the target network information collection request signal, the target network MAC layer collects the target network information and transmits the collected information to the vertical handover control module through the adaptation module.

22. The apparatus of claim 21, wherein upon receipt of the target network information, the vertical handover control module selects a target base station for a vertical handover and transmits a link-up request signal to the adaptation module in order to link up with the target base station;
upon receipt of the link-up request signal, the adaptation module transmits a link-up request signal to the target network MAC layer; and
upon receipt of the link-up request signal, the target network MAC layer performs the link-up with the target base station and transmits a link-up complete signal to the adaptation module.

23. The apparatus of claim 22, wherein upon receipt of the link-up complete signal, the adaptation module receives an IP address for communication with the target base station and performs blinding update and registration of the IP address in the target base station; and
the target network MAC layer receives traffic data from the target base station after the IP address registration and the blinding update.

24. The apparatus of claim 23, wherein each of the fist MAC layer and the second MAC layers communicates a signal with the adaptation module by using a signal standardized in a network for each MAC layer or by using a signal defined commonly in each MAC layers.

25. The apparatus of claim 24, wherein the commonly defined signal includes a target network information collection request/response signal and a link-up request/response signal.
